# EUROPEAN PATENT SPECIFICATION

(11) **EP 3 773 089 B1**
(45) Date of publication and mention of the grant of the patent: **10.11.2021**
(21) Application number: 19709386.7
(22) Date of filing: 26.02.2019
(51) Int. Cl.: A47J 31/18, A47J 31/00

(54) **A COFFEE MACHINE**
KAFFEEMASCHINE
MACHINE À CAFÉ

(30) Priority: 02.04.2018 TR 201804613
(43) Date of publication of application: 17.02.2021
(73) Proprietor: Arçelik Anonim Sirketi, 34445 Istanbul (TR)
(72) Inventor: CALIK, Ramazan, 34950 ISTANBUL (TR); YUZER, Ozan, 34950 ISTANBUL (TR); BASARAN, Umut, 34950 ISTANBUL (TR); DONERKAYALI, Arda, 34950 ISTANBUL (TR); OZYURT, Bekir, 34950 ISTANBUL (TR); KANTAS, Murat, 34950 ISTANBUL (TR)
(86) International application number: PCT/EP2019/054639
(87) International publication number: WO 2019/192778

(56) References cited:
- EP-A1- 1 763 311
- EP-B1- 1 763 311
- WO-A2-2008/068225
- CN-U- 205 729 173
- US-A1- 2017 339 973

## Description

The present invention relates to a coffee machine capable cooking Turkish coffee.

Coffee machines capable of automatically cooking Turkish coffee are known in the art. In such coffee machines, various sensors such as heat, infrared or conductivity sensors are used in terminating the cooking process. In applications where infrared sensors are used, it is almost possible to cook coffee with identical taste and consistency every time, but the sensor surface becomes dirty after several cooking processes, requiring manual cleaning by the user. Otherwise the infrared sensor may make incorrect determinations. In addition, infrared sensors do not measure distances directly, and they determine a given distance according to the intensity of the retroreflected light. Distance determination requires each sensor to be calibrated separately, increasing labor costs in production stage. The incapacity of the infrared sensors to directly measure distances also leads to problems in cooking different types of Turkish coffee; in lighter and darker colored coffees, an infrared sensor reads different distances even when the actual foam height is equal because of the variation in the reflected light intensity, thereby making it not possible to cook coffee with identical taste every time. Furthermore, the optimum operational range of infrared sensors is narrow, thereby restricting the depth of cooking chambers available in Turkish coffee machines using infrared sensors and therefore the amount of coffee which can be cooked simultaneously. Although heat or conductivity sensors are less affected from dirt, it is not possible to cook coffee with identical taste and consistency every time since such sensors have low precision. The consumers demand a coffee machine in which cooking is sensed by a sensor capable of making high-precision measurements and not requiring separate calibrations for different types of coffee.

State of the art European patent application no. EP1763311 discloses a Turkish coffee machine in which whether coffee is cooked is sensed by using an infrared sensor.

State of the art European patent application no. EP2316312 discloses a coffee machine in which whether Turkish coffee is cooked is sensed by using a conductivity sensor.

State of the art International patent application no. WO2008/068225 discloses a Turkish coffee machine wherein a level sensor is used to prevent overflowing during cooking the coffee.

State of the art Chinese utility model no. CN205729173 discloses a cooking machine wherein a liquid level in a cup is detected by means of a laser sensor.

The aim of the present invention is to realize a coffee machine not requiring different calibrations for different types of coffee and capable of cooking a desired amount of Turkish coffee with identical taste and consistency every time.

The coffee machine realized to achieve the aim of the present invention is defined in the first claim and the dependent claims. A time of flight sensor enables measuring distances directly and allows minimizing the failure rate in cooking coffees of varying color tones. In addition, a cooking chamber of a desired size (depth) can be used thanks to a time of flight sensor having a wider operational range, enabling cooking a desired number of cups of coffee simultaneously.

In an embodiment of the invention, the time of flight sensor begins measuring upon a user pressing a cooking start button. In another embodiment of the invention, the time of flight sensor begins measuring upon placement of the cooking chamber in the cooking compartment. These embodiments intend to avoid overflowing events experienced when a user overfills the cooking chamber. The level of the cooking chamber contents is measured even before the heater is activated, and if there is a risk of overflowing, cooking is terminated before activation of the heater, avoiding likely overflowing events.

In another embodiment of the invention, the control unit compares the limit cooking termination height saved in its memory according to the amount of coffee to be cooked and the value measured by the time of flight sensor, and terminates the cooking process when these values match.

According to the invention, the coffee machine comprises a shield glass protecting the time of flight sensor from dirt particles. The time of flight sensor is affected from dirt particles such as coffee grounds, etc. on the shield glass, and the measured values are always below a given limit height independently of the levels in the cooking chamber. The control unit determines that the shield glass is dirty when the measured value is below the limit height. In a version of this embodiment, the control unit enables alerting the user upon determining the shield glass being dirty, and in another version, the control unit does not activate the heater in this case, preventing a defective cooking process.

In another embodiment of the invention, the time of flight sensor operates in wave length in the range of 900-1000 nm, particularly in the range of 930-950 nm, and more particularly of 940 nm. Light in the outer environment in said wave lengths is weakened by the humidity in air, therefore the time of flight sensor is thus enabled no to be affected from outer environmental factors.

The coffee machine of the invention enables both, cooking a desired number of cups of coffee, and avoiding losing taste and consistency in cooking coffees with different color tones.

A coffee machine realized to achieve the aim of the present invention is illustrated in the accompanying drawings, wherein:

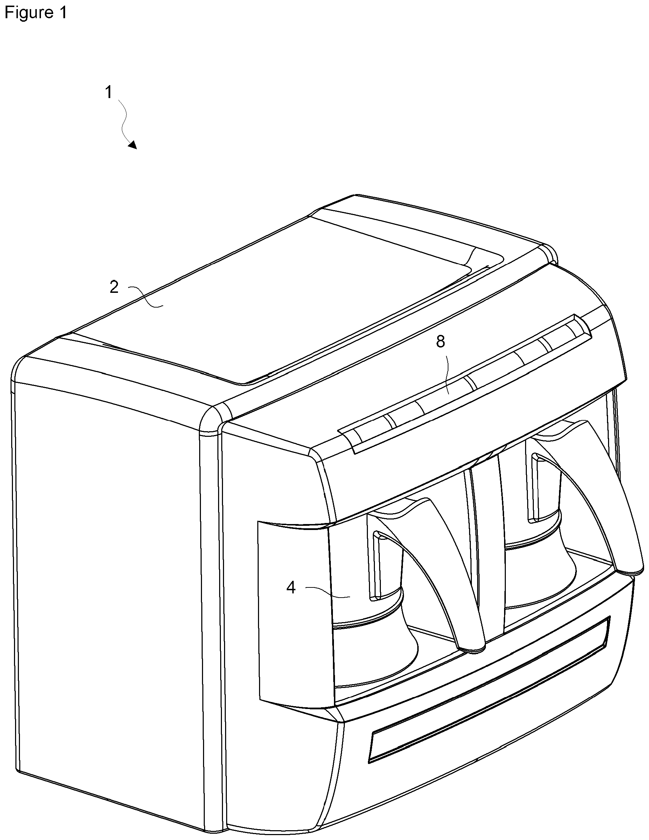

Figure 1 is a perspective view of the coffee machine.

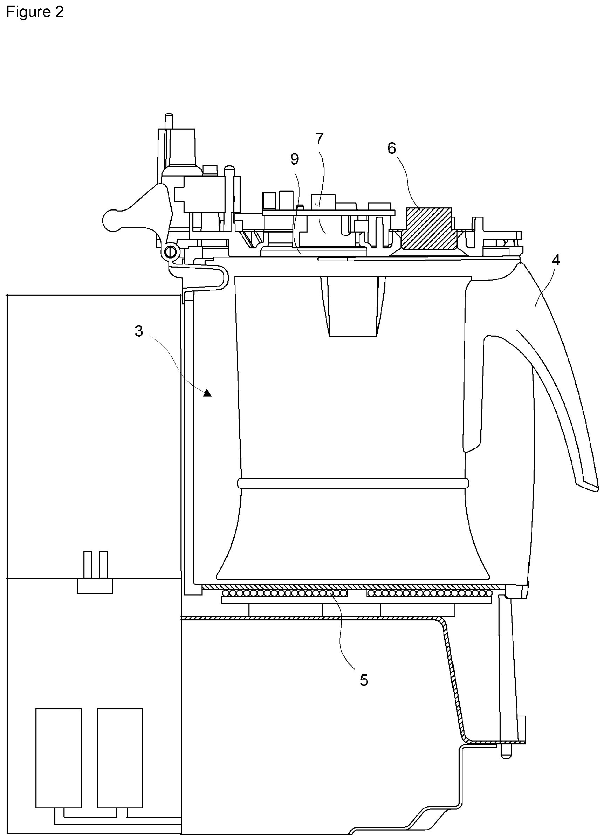

Figure 2 is a sectional view of the coffee machine in an embodiment of the invention.

The elements in the figures are numbered individually and the correspondence of these numbers are given hereinafter.
1- Coffee machine
2- Body
3- Cooking compartment
4- Cooking chamber
5- Heater
6- Control unit
7- Time of Flight Sensor
8- Cooking start button
9- Shield glass

The coffee machine (1) comprises a body (2), a cooking compartment (3) provided in the body (2), a cooking chamber (4) in which the cooking process is performed, placed in the cooking compartment (3), a heater (5) provided on the base of the cooking compartment (3), and a control unit (6) starting the cooking process by activating the heater (5), terminating the cooking process by turning the heater (5) off, and enabling controlling the cooking process. In the coffee machine (1), the user fills Turkish coffee into the cooking chamber (4), places the cooking chamber (4) to the cooking compartment (3) and starts the cooking process. The control unit (6) starts the cooking process by activating the heater (5). Once the cooking process is completed, the control unit (6) turns the heater (5) off, terminating the cooking process.

The coffee machine (1) of the invention comprises a time of flight sensor (7) provided in the body (2), enabling measuring the distance therefrom to the content of the cooking chamber (4) by being positioned so as to face the cooking compartment (3), and a control unit (6) enabling deciding to start and/or to terminate the cooking process according to the measured level value by the time of flight sensor (7). The time of flight sensor (7) enables measuring the distance between itself and the items disposed in the cooking compartment (3). The time of flight sensor (7) has a transmitter transmitting light and a receiver detecting the retroreflection of the light sent by the transmitter, and enables obtaining distance information by calculating the duration in which light travels between the transmitter and the receiver. When the cooking chamber (4) is placed in the cooking compartment (3), the distance is measured between the time of flight sensor (7) and the content of the cooking chamber (4), or if it is empty, the base of the cooking chamber (4). When the cooking process starts and the coffee water mixture in the cooking chamber (4) begins to foam and rise, the measured distance decreases.

In an embodiment of the invention, the coffee machine (1) comprises a cooking start button (8) provided on the body (2), and the time of flight sensor (7) begins reading measurements once a user presses the cooking start button (8). Once the user places the cooking chamber (4) in the cooking compartment (3) and presses the cooking start button (8), the time of flight sensor (7) begins reading measurements, measuring the amount of coffee, and of water if any, in the cooking chamber (4). If the measured value is above a predetermined limit overflow height, the control unit (6) does not start the cooking process. Thus, a cooking process with the risk of an overflow event upon activation of the heater (5), is not started at all and the user is alerted.

In another embodiment of the invention, the time of flight sensor (7) begins reading measurements upon placement of the cooking chamber (4) in the cooking compartment (3). Similar to the embodiment explained above, the time of flight sensor (7) begins reading measurements upon placement of the cooking chamber (4) in the cooking compartment (3), and likely overflow events are eliminated from the very beginning. Detection of placement of the cooking chamber (4) in the cooking compartment (3) can be performed by methods known in the art.

In another embodiment of the invention, the control unit (6) enables deciding to terminate the cooking process if depending on the amount of coffee to be cooked, the value measured by the time of flight sensor (7) is lower than a predetermined limit termination height. Different limit termination heights are saved in the memory of the control unit (6) according to the amount of coffee desired to be cooked and entered by using the coffee machine (1) interface by the user. During the cooking process, the time of flight sensor (7) continuously reads measurements, and the control unit (6) terminates the cooking process if the measured values are equal to or lower than the limit termination value corresponding to the amount of coffee desired to be cooked and entered to the control unit (6) by means of the interface.

The coffee machine (1) comprises a shield glass (9) protecting the time of flight sensor (7) from the heat and steam released during cooking, and the control unit (6) decides that the shield glass (9) is dirty if the value measured by the time of flight sensor (7) is lower than a predetermined limit height. When the shield glass (9) is dirty, the measurements of the time flight sensor (7) are always below a limit height due to light being blocked by the dirt particles on the shield glass (9). In this case, the control unit (6) can decide whether the shield glass (9) is dirty by considering the measured values. In a version of this embodiment, the control unit (6) enables alerting the user about dirtiness of the shield glass (9) once this is determined or upon completion of the current cooking process. The user is thus informed that he/she needs to clean the shield glass (9), and eliminating the necessity for the user to everlasting check the shield glass (9). In another version of this embodiment, the control unit (6) does not start the cooking process by not activating the heater (5) upon determining dirtiness of the shield glass (9). This enables preventing undesired circumstances likely to be caused by erroneous measurements such as overflowing events or cooking foul tasting coffee.

In another embodiment of the invention, the time flight sensor (7) measures with light of a wave length in the range of 900 nm to 1000 nm, particularly measures with light of a wave length in the range of 930 nm to 950 nm, more particularly measures with light of a wave length of 940 nm. Water vapor in air absorbs light within said wave length range, therefore, in cases when the cooking compartment (3) is not flush with the cooking chamber (4) and the time of flight sensor (7) detects the outer environment, the measured value is enabled to be minimally affected from outer environment light by means of the selected wave lengths. This embodiment eliminates the necessity to position the cooking chamber (4) in the cooking compartment (3) in a light-proof manner, and enables a user to observe the cooking chamber (4) during the cooking process.

In the coffee machine (1) of the invention, a desired amount of coffee is enabled to be cooked thanks to the time of flight sensor (7). Furthermore, it is not required to use an external sensor to determine whether the shield glass (9) is dirty.

## Claims

1. A coffee machine (1) **comprising** a body (2), a cooking compartment (3) provided in the body (2), a cooking chamber (4) in which the cooking process is performed, placed into the cooking compartment (3), a heater (5) provided on the base of the cooking compartment (3), a control unit (6) arranged to start the cooking process by activating the heater (5), terminate the cooking process by turning the heater (5) off, and control the cooking process, a time of flight sensor (7) provided in the body (2), enabling measuring the distance therefrom to the content of the cooking chamber (4) by being positioned so as to face the cooking compartment (3), wherein the control unit (6) is further arranged to decide to start and/or to terminate the cooking process according to data received from the time of flight sensor (7), **characterized by** a shield glass (9) protecting the time of flight sensor (7) from the heat and steam released during cooking, **and by** the control unit (6) being arranged to determine that the shield glass (9) is dirty if the value measured by the time of flight sensor (7) is lower than a predetermined limit height.

2. A coffee machine (1) according to claim 1, **characterized by** a cooking start button (8) provided on the body (2), **and by** the time of flight sensor (7) beginning reading measurements once a user presses the cooking start button (8).

3. A coffee machine (1) according to claim 1, **characterized by** the time of flight sensor (7) beginning reading measurements upon placement of the cooking chamber (4) in the cooking compartment (3).

4. A coffee machine (1) according to any one of the preceding claims, **characterized by** the control unit (6), enabling deciding to terminate the cooking process if depending on the amount of coffee to be cooked, the value measured by the time of flight sensor (7) is lower than a predetermined limit termination height.

5. A coffee machine (1) according to any one of the preceding claims, **characterized by** the control unit (6) enabling alerting the user if the shield glass (9) is determined to be dirty.

6. A coffee machine (1) according to any one of the preceding claims, **characterized by** the control unit (6) not starting the cooking process by not activating the heater (5) if the shield glass (9) is determined to be dirty.

7. A coffee machine (1) according to any one of the preceding claims, **characterized by** the time flight sensor (7) measuring with light of a wave length in the range of 900 nm to 1000 nm, particularly measuring with light of a wave length in the range of 930 nm to 950 nm, more particularly measuring with light of a wave length of 940 nm.

## Patentansprüche

1. Eine Kaffeemaschine (1) **umfasst** einen Körper (2), eine am Körper (2) vorgesehene Braukammer (3), einen in der Braukammer (3) platzierten Brühkammer (4), in dem der Kochvorgang durchgeführt wird, eine am Boden der Braukammer (3) vorgesehener Heizer (5), eine Steuereinheit (6), die angeordnet ist, um den Kochvorgang durch Aktivieren des Heizers (5) zu starten, den Kochvorgang durch Ausschalten des Heizers (5) zu beenden und den Kochvorgang zu steuern, einen Laufzeitsensor (7), der im Körper (2) vorgesehen ist, der es ermöglicht, den Abstand davon zum Inhalt der Brühkammer (4) zu messen, indem er so positioniert ist, dass er dem Braukammer (3) zugewandt ist, wobei die Steuereinheit (6) außerdem dazu angeordnet ist, um zu entscheiden, den Kochvorgang gemäß den vom Laufzeitsensor (7) empfangenen Daten zu starten und/oder zu beenden, **gekennzeichnet ist sie durch** ein Schutzglas (9), das den Laufzeitsensor (7) vor der Hitze und dem Dampf schützt, die während des Kochens freigesetzt werden, und durch die Steuereinheit (6), die angeordnet ist, um zu bestimmen, dass das Schutzglas (9) verschmutzt ist, wenn der von dem Laufzeitsensor (7) gemessene Wert niedriger als eine vorbestimmte Grenzhöhe ist.

2. Eine Kaffeemaschine (1), wie in Anspruch 1 aufgeführt, **ist dadurch gekennzeichnet, dass** ein Kochstartknopf (8) an dem Körper (2) vorgesehen ist, und dadurch, dass der Laufzeitsensor (7) mit dem Ablesen von Messungen beginnt, sobald ein Benutzer den Kochstartknopf (8) drückt.

3. Eine Kaffeemaschine (1), wie in Anspruch 1 aufgeführt, **ist dadurch gekennzeichnet, dass** der Laufzeitsensor (7) mit dem Aufsetzen des Brühkammers (4) in den Braukammer (3) mit Ablesemessungen beginnt.

4. Eine Kaffeemaschine (1), wie in einem der vorherigen Ansprüchen aufgeführt, **ist dadurch gekennzeichnet, dass** die Steuereinheit (6) die Entscheidung ermöglicht, den Kochvorgang zu beenden, wenn abhängig von der zu kochenden Kaffeemenge der von dem Laufzeitsensor (7) gemessene Wert niedriger ist als eine vorbestimmte Grenzbeendigungshöhe.

5. Eine Kaffeemaschine (1), wie in einem der vorherigen Ansprüchen aufgeführt, **ist dadurch gekennzeichnet, dass** die Steuereinheit ( 6 ) es ermöglicht, den Benutzer zu alarmieren, wenn festgestellt wird, dass das Schutzglas ( 9 ) verschmutzt ist.

6. Eine Kaffeemaschine (1), wie in einem der vorherigen Ansprüchen aufgeführt, **ist dadurch gekennzeichnet, dass** die Steuereinheit (6) den Kochvorgang nicht startet, indem sie den Heizer (5) nicht aktiviert, wenn festgestellt wird, dass das Schutzglas (9) verschmutzt ist.

7. Eine Kaffeemaschine (1), wie in einem der vorherigen Ansprüchen aufgeführt, **ist dadurch gekennzeichnet, dass** der Laufzeitsensor (7) mit Licht einer Wellenlänge im Bereich von 900 nm bis 1000 nm misst, besonders mit Licht einer Wellenlänge im Bereich von 930 nm bis 950 nm misst, insbesondere mit Licht einer Welle Länge von 940 nm.

## Revendications

1. Une machine à café (1) **comprenant** un corps (2), un compartiment de chauffe (3) prévu dans le corps (2), une chambre de chauffe (4) dans laquelle le processus de chauffe est effectué, placée dans le compartiment de chauffe (3), un élément chauffant (5) prévu sur la base du compartiment de chauffe (3), une unité de commande (6) agencée pour démarrer le processus de chauffe en activant l'élément chauffant (5), terminer le processus de chauffe en éteignant l'élément chauffant (5), et commander le processus de chauffe, un capteur de temps de vol (7) prévu dans le corps (2), permettant de mesurer la distance entre celui-ci et le contenu de la chambre de chauffe (4) en étant positionné de manière à faire face au compartiment de chauffe (3), dans lequel l'unité de commande (6) est en outre agencée pour décider de démarrer et/ou de terminer le processus de chauffe selon les données reçues du capteur de temps de vol (7), **est caractérisé en ce qu'**un verre de protection (9) protège le capteur de temps de vol (7) de la chaleur et de la vapeur libérées pendant la chauffe, **et en ce que** l'unité de commande (6) est agencée pour déterminer que le verre de protection (9) est sale si la valeur mesurée par le capteur de temps de vol (7) est inférieure à une hauteur limite prédéterminée.

2. Une machine à café (1) selon la déclaration 1, **est caractérisée en ce qu'**un bouton de démarrage de la cuisson (8) est prévu sur le corps (2), **et en ce que** le capteur de temps de vol (7) commence à lire les mesures dès qu'un utilisateur appuie sur le bouton de démarrage de la chauffe (8).

3. Une machine à café (1) selon la déclaration 1, **est caractérisée en ce que** le capteur de temps de vol (7) commence à lire les mesures lors du placement de la chambre de chauffe (4) dans le compartiment de chauffe (3).

4. Une machine à café (1) selon l'une quelconque des déclarations précédentes, **est caractérisée en ce que** l'unité de commande (6) permet de décider de terminer le processus de chauffe si, en fonction de la quantité de café à préparer, la valeur mesurée par le capteur de temps de vol (7) est inférieure à une hauteur limite de fin de chauffe prédéterminée.

5. Une machine à café (1) selon l'une quelconque des déclarations précédentes, **est caractérisée en ce que** l'unité de commande (6) permet d'alerter l'utilisateur si la vitre de protection (9) est déterminée comme étant sale.

6. Une machine à café (1) selon l'une quelconque des déclarations précédentes, **est caractérisée en ce que** l'unité de commande (6) ne démarre pas le processus de chauffe en n'activant pas le dispositif de chauffage (5) s'il est déterminé que le verre de protection (9) est sale.

7. Une machine à café (1) selon l'une quelconque des déclarations précédentes, **est caractérisée en ce que** le capteur de temps de vol (7) mesure avec de la lumière d'une longueur d'onde dans la gamme de 900 nm à 1000 nm, en particulier mesure avec de la lumière d'une longueur d'onde dans la gamme de 930 nm à 950 nm, plus particulièrement mesure avec de la lumière d'une longueur d'onde de 940 nm.
